# FASCICULE DE BREVET EUROPEEN

(11) **EP 0 792 497 B1**
(45) Date de publication et mention de la délivrance du brevet: **19.08.1998**
(21) Numéro de dépôt: 95940311.4
(22) Date de dépôt: 15.11.1995
(51) Int. Cl.: G06K 19/073, H01L 27/02

(54) **DISPOSITIF DE SECURITE ACTIF A MEMOIRE ELECTRONIQUE**
SICHERHEITSVORRICHTUNG MIT EINEM ELEKTRONISCHEN SPEICHER
ACTIVE SECURITY DEVICE WITH ELECTRONIC MEMORY

(30) Priorité: 17.11.1994 FR 9413886; 08.03.1995 FR 9502796
(43) Date de publication de la demande: 03.09.1997
(73) Titulaire: SCHLUMBERGER INDUSTRIES S.A., 92120 Montrouge (FR)
(72) Inventeur: RHELIMI, Alain, F-92120 Montrouge (FR)
(74) Mandataire: Lemoyne, Didier
(86) Numéro de dépôt international: FR9501497
(87) Numéro de publication internationale: WO9616378

(56) Documents cités:
- EP-A- 0 509 567
- DE-A- 4 018 688
- FR-A- 2 647 929
- US-A- 5 142 345

## Description

La présente invention concerne un dispositif de sécurité à mémoire électronique destiné à la protection d'informations secrètes contenues dans la mémoire comme indiqué dans le préambule de la revendication et comme connu, par exemple, du document DE-A-4 018 688.

De tels dispositifs sont présents notamment dans des terminaux de paiement portables, à l'intérieur d'un module électronique dit de sécurité applicative (SAM). Ces modules sont d'une importance capitale car ils contiennent des informations secrètes (exemple : clés bancaires) dont la découverte permettrait l'accès à l'ensemble d'un système.

Les informations se trouvent nécessairement dans une couche électronique d'un circuit intégré. Une couche de passivation recouvre généralement la couche électronique.

Dans certains cas, il est possible qu'elle ne soit pas un obstacle suffisant à l'accès aux informations secrètes, si des moyens de lecture sophistiqués sont mis en oeuvre pour lire les informations à travers la couche de passivation. Ces moyens de lecture peuvent par exemple mettre en oeuvre des techniques exploratoires du type à faisceaux de particules.

Parmi les techniques existantes destinées à protéger ces informations, on connaît celle qui consiste à recourir à des capteurs d'intrusion traditionnels qui protègent une enceinte dans laquelle est enfermée la mémoire électronique contenant les informations.

On connaît également des moyens protégeant directement le circuit intégré contre une lecture à l'aide de moyens sophistiqués. Ces moyens sont de deux types : le premier consiste à masquer le dessin du semi-conducteur, par exemple par métallisation, grille de faux circuits ou couche de carbone diamant ; le second consiste à mémoriser les informations dans une mémoire du type RAM et à les combiner éventuellement avec des nombres aléatoires modifiés en permanence. Les informations ne sont accessibles que par l'intermédiaire d'un système d'exploitation qui en contrôle l'accès. Les principes utilisés sont identiques à ceux des cartes à microprocesseur. Selon ce second type, les secrets contenus dans une mémoire RAM sont systématiquement perdus si l'alimentation du composant est interrompue. Dans ce cas, l'accès aux informations n'est pas totalement insurmontable si on connaît :
- la manière d'éliminer la résine du boîtier du composant sous tension, sans créer un court circuit ce qui entraînerait la perte des informations,
- le schéma exact du composant,
- la table de "brouillage" de la mémoire,
- l'adresse des secrets dans le plan mémoire,
- et la manière d'enregistrer et d'analyser correctement le bus d'adresses et de données en temps réel.

Les différentes techniques antérieures ci-dessus ont l'inconvénient d'être soit inefficaces si des moyens très sophistiqués sont mis en oeuvre, soit d'être onéreuses dans le cas notamment de l'utilisation de masques au carbone diamant.

La présente invention a pour but de fournir un dispositif électronique de sécurité dont l'efficacité est améliorée et dont la réalisation est en outre compatible avec des procédés de fabrication standardisés.

A cet effet, la présente invention a pour objet un dispositif de sécurité contenant des informations secrètes et destiné à empêcher l'accès à ces informations par des moyens d'exploration externes, du type comprenant une zone mémoire d'un circuit intégré recevant lesdites informations et des moyens de protection recouvrant solidairement au moins ladite zone mémoire de manière à former obstacle à une exploration caractérisé en ce que lesdits moyens de protections sont constitués par au moins un second circuit intégré, et en ce qu'il comprend en outre des moyens de liaison interactifs entre les deux circuits intégrés, et des moyens de destruction des informations secrètes en cas de rupture ou de perturbation de leur liaison.

Selon une caractéristique de l'invention, le dispositif comprend des moyens d'authentification permettant d'authentifier au moins le second circuit intégré.

Selon un premier mode de réalisation de l'invention, les circuits intégrés sont montés l'un derrière l'autre et comportent des connexions électriques externes les reliant l'un à l'autre.

Selon un deuxième mode de réalisation de l'invention, les circuits intégrés sont montés face à face et comportent des connexions électriques internes les reliant l'un à l'autre.

Les caractéristiques et avantages de la présente invention ressortiront de la description qui va suivre, d'une forme de réalisation de l'invention faite en regard des dessins annexés sur lesquels :
- la figure 1 représente une coupe de la structure de l'invention selon un premier mode de réalisation,
- la figure 2 représente une coupe de la structure de l'invention selon un deuxième mode de réalisation,
- la figure 3 représente l'invention avec des modes de liaison interactifs particuliers,
- la figure 4 représente une coupe de la structure de l'invention selon un troisième mode de réalisation,
- la figure 5 représente une coupe d'une variante de réalisation de la structure de l'invention.

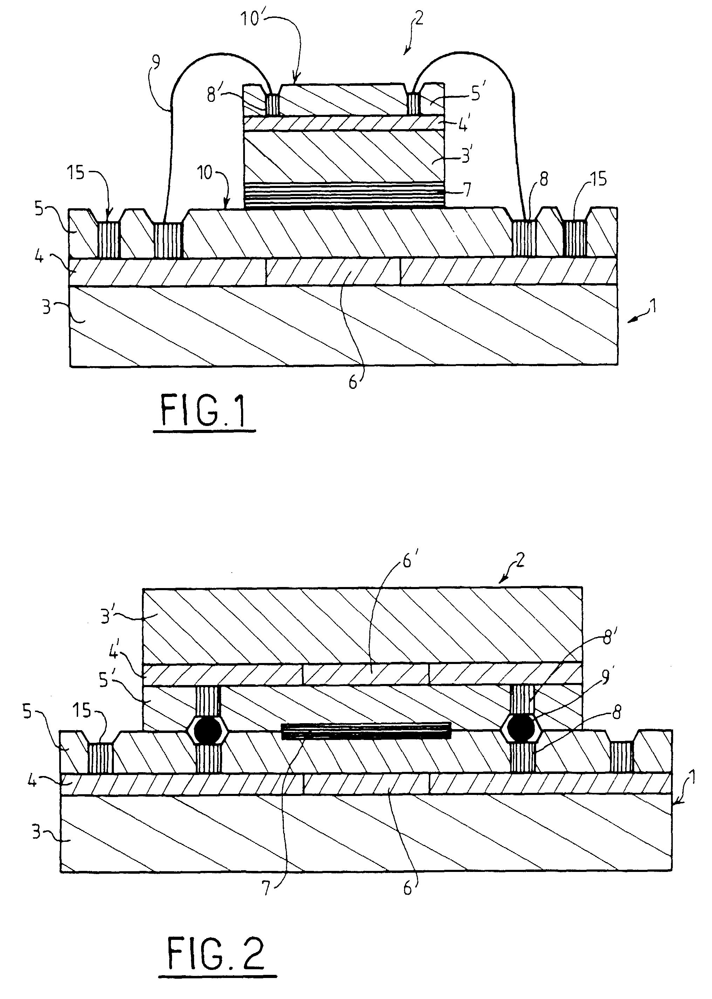

A la figure 1, on voit que le dispositif de sécurité est constitué de deux circuits électroniques disposés l'un au-dessus de l'autre, un premier circuit à protéger 1, appelé maître, sous un second circuit protecteur 2 appelé esclave. Il s'agit en l'occurrence de deux circuits intégrés 1, 2 fixés solidairement l'un à l'autre et reliés ensemble par des moyens de liaison. Ces moyens de liaison doivent permettre une interaction entre les circuits maître et esclave : un échange ou une circulation de flux ou de signaux de toute nature (magnétique, électrique, optique, capacitif...). Ils peuvent concerner un simple contact électrique. De préférence, l'interaction est fonction de la distance séparant les circuits intégrés si bien que le moindre déplacement relatif des deux circuits la rompt ou la perturbe.

A défaut de ces moyens de liaisons préférentiels ou de manière complémentaire, les moyens de liaison de l'invention permettent une communication entre les deux circuits, considérés alors comme émetteurs et/ou récepteurs.

Chaque circuit intégré est constitué d'un substrat 3, 3' d'une couche électronique 4, 4' sur le substrat et d'une couche de passivation 5, 5' recouvrant la couche électronique. Le substrat est un semi-conducteur généralement en Silicium ou en Arséniure de Gallium. Cette couche mesure entre 100 et 300 micromètres d'épaisseur. La couche électronique contient des fonctionnalités ainsi qu'une zone mémoire 6, 6' destinée à contenir les informations secrètes. Cette couche mesure une dizaine de micromètres d'épaisseur. La couche de passivation disposée au-dessus de la couche électronique est en matériau inerte par exemple en nitrure de Silicium. Cette couche mesure quelques dizaines de micromètres d'épaisseur.

Le second circuit intégré a une structure globalement équivalente à celle du premier circuit à l'exception de ses dimensions ; la couche électronique peut comprendre une zone mémoire qui peut également contenir une partie des informations secrètes. Le second circuit intégré est disposé au-dessus du premier de telle manière qu'il recouvre au moins la zone mémoire contenant les informations secrètes. Il peut également masquer des circuits sensibles tels que le processeur, le bus et les mémoires et tout élément de circuit susceptible de donner une information sur les secrets.

Les deux circuits intégrés sont reliés solidairement, par exemple par une couche de colle au cyanoacrylate 7 disposée entre la couche de passivation du premier circuit intégré et le substrat du second circuit intégré. La colle peut être choisie de manière à ce que toute tentative de séparation des deux circuits intégrés provoque soit l'arrachement de la couche de passivation soit l'arrachement du substrat.

On peut également utiliser plusieurs zones de collage avec chacune une colle de nature différente, ou une combinaison de colles ou autre technique de solidarisation.

Le premier circuit intégré a une dimension plus importante que le second pour laisser un accès à son alimentation et à des connexions. Des moyens de connexion relient les deux circuits intégrés par l'extérieur ; à cet effet, des points 8 de connexion débouchent sur les surfaces libres 10, 10' respectives de chaque circuit intégré. Ces points de connexion sont reliés par des fils de câblage 9 en or ou aluminium qui passent à l'extérieur des circuits intégrés. L'ensemble électronique est constamment maintenu sous tension par une pile de sauvegarde extérieure (non représentée). Le composant maître comporte des points 15 de connexion avec l'environnement, par exemple, avec les éléments constitutifs du SAM. De façon classique, les fils de câblage peuvent être noyés dans un matériau d'enrobage tel que de la résine.

La mémoire du premier circuit intégré, voire du second peut être de type RAM.

Selon un aspect amélioré de l'invention, le dispositif de sécurité peut comprendre en outre des moyens d'authentification permettant d'authentifier au moins le second circuit électronique. L'authentification peut être effectuée à tout moment, de manière périodique ou aléatoire. La périodicité doit être inférieure au temps nécessaire pour effectuer une éventuelle substitution du second circuit par un autre circuit de simulation. Ces moyens sont de préférence compris dans l'un et l'autre circuits intégrés. Ils coopèrent ensemble de manière à assurer au moins l'authentification du second circuit intégré. Ainsi, l'authentification peut être soit de nature unilatérale, soit mutuelle. Le fonctionnement de la procédure d'authentification entre les deux circuits intégrés, peut reposer sur un principe traditionnel d'échange de signaux cryptographiques ou électroniques.

Selon un aspect plus perfectionné du dispositif, les moyens d'authentification peuvent fonctionner selon une procédure mettant en oeuvre une clé secrète de session dynamique connue en soi. Les moyens à mettre en oeuvre sont décrits par la norme américaine ANSI 9.24.

Le dispositif de sécurité comprend des moyens de destruction des informations secrètes en cas d'absence d'authentification ainsi qu'en cas de déconnexion ou de destruction de l'un des circuits électroniques. Ces moyens font au moins partie du premier circuit intégré et sont connus en soi, ce sont par exemple, des moyens de mise à zéro générale de la mémoire.

A la figure 2, on voit que le dispositif de sécurité selon l'invention se présente sous une forme différente. Il est également composé de deux circuits intégrés dont la structure de chacun est globalement identique à celle des circuits intégrés du précédent mode de réalisation. Les mêmes numéros de référence sont donc utilisés pour désigner les mêmes éléments. La différence essentielle réside dans le fait que les deux circuits intégrés sont montés face à face.

Selon ce montage, ces deux circuits intégrés sont mécaniquement solidaires entre eux par l'intermédiaire de leur couche de passivation. Le montage est fait de telle manière que leurs points de connexion se trouvent en regard les uns des autres. Les deux circuits intégrés peuvent être reliés comme précédemment par une couche de colle à base de cyanoacrylate.

Le contact électrique entre les deux circuits peut s'effectuer à travers une colle conductrice, par exemple colle à base d'argent. Selon un mode de réalisation des connexions, celles-ci sont réalisées par une technique de soudage, par exemple et de façon classique avec des billes d'indium.

La même colle conductrice peut servir non seulement à assurer le contact mais aussi à assurer la solidarisation des deux circuits intégrés. Ainsi, l'utilisation de solvant pour la dissolution de la colle en vue de désolidariser les composants provoque également la rupture électrique de la connexion.

De manière avantageuse, on peut alimenter d'abord le composant esclave par l'extérieur puis faire transiter l'alimentation à travers des connexions électriques internes entre les deux composants pour alimenter le composant maître ou inversement.

Ainsi en cas de séparation, l'alimentation du composant maître est coupée et les informations sont perdues si elles sont dans une mémoire RAM (mémoire volatile non secourue).

On s'aperçoit que ce montage est particulièrement intéressant dans la mesure où les connexions entre les deux circuits intégrés sont internes, ce qui représente une barrière supplémentaire à la violabilité du dispositif de sécurité.

On peut prévoir de répartir les informations secrètes dans les deux composants maître et esclave. Ils peuvent avoir la même importance et être maître et esclave à tour de rôle.

Le principe de protection peut être appliqué à plusieurs circuits intégrés au-delà de deux. Ces derniers peuvent être empilés les uns sur les autres.

Il peut y avoir également un composant maître comportant n surfaces à protéger, chaque surface étant recouverte par un composant esclave.

On peut aussi avoir dans une même couche électronique plusieurs circuits électroniques maîtres contenant chacun une partie des informations secrètes, protégé chacun par un composant esclave.

On comprend que le dispositif peut-être réalisé à partir de deux circuits intégrés selon une technique de fabrication standardisée dite "Multi-Chip-Module" (MCM). Ce dispositif a donc l'avantage d'être économique.

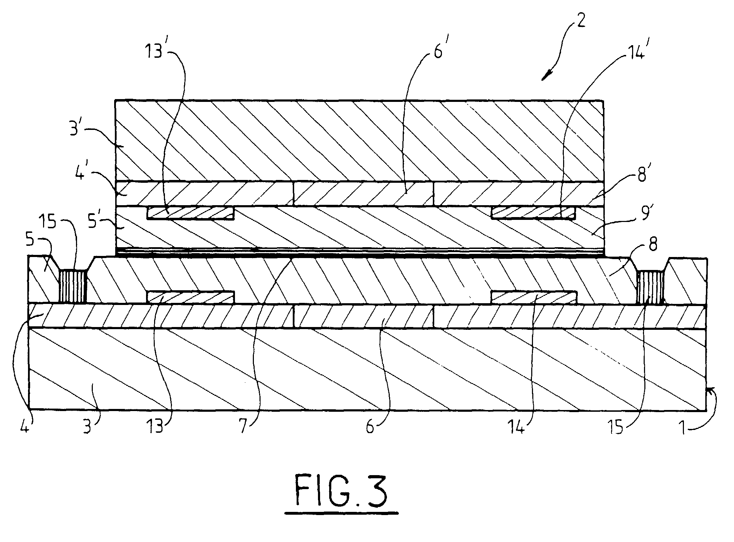

A la figure 3, on voit que les deux composants sont montés face à face comme à la figure 2. Les mêmes numéros de référence sont utilisés pour les mêmes éléments. Les moyens de liaison sont toutefois de nature différente des connexions électriques.

Les éléments de connexion représentent chacun une bobine électromagnétique 13, 13', 14, 14' gravées sur le semi-conducteur de chaque composant. Ces bobines sont placées face à face avec un couplage électromagnétique, serré de préférence. Par ces moyens, on assure une interaction magnétique entre les deux composants.

Avantageusement, l'interaction peut être utilisée pour véhiculer des informations de communication entre les deux composants, par exemple dans le but d'une authentification selon la procédure décrite précédemment. Elle peut aussi permettre une alimentation d'un composant à travers l'autre.

De préférence, on réalise à la fois une communication pour la transmission de données et une alimentation par le biais des mêmes bobines. Les moyens à mettre en oeuvre, connus en soi, sont décrits dans la norme ISO (IEC 10536 partie 3). Ils font intervenir deux signaux déphasés pour l'activation des bobines.

On constate que l'emploi d'un couplage électromagnétique très serré ne supporte pratiquement pas de déplacement relatif d'un composant par rapport à l'autre. En effet, le moindre déplacement provoquerait une perturbation ou une coupure de l'interaction des bobines émettrices et réceptrices. De la même façon, toute tentative d'introduction d'un élément de dérivation entre les connexions provoquerait une perturbation détectable ou une coupure de l'interaction.

La coupure de l'alimentation d'un composant comportant les informations dans une mémoire RAM entraîne la perte des informations tandis que la perturbation peut entraîner une modification totale ou partielle du signal de communication et la perte de l'intégrité d'un message entre les deux composants.

Un des moyens pour détecter la perte de l'intégrité d'un message consiste à recourir à des codes correcteurs d'erreurs ou de détection d'erreurs classiques tels que code de Hamming ou CRC 16 (code polynomial).

En cas de détection d'une erreur, les moyens de destruction sont activés pour éliminer les informations secrètes. En cas d'utilisation d'une mémoire RAM, les moyens de destruction peuvent consister en des moyens de coupure de l'alimentation du composant ; par exemple un transistor monté en série avec le bus d'alimentation de la mémoire.

Les composants peuvent comporter d'autres moyens de liaison à la place des bobines électromagnétiques. Les éléments 13, 13', 14, 14' peuvent représenter des capacités ou des diodes optiques pour effectuer respectivement une interaction capacitive ou opto-électronique.

En cas de couplage opto-électronique, on aménage entre les éléments 13, 13' et 14, 14' une fenêtre transparente soit avec absence de matière soit avec une matière transparente (non représentée).

Les moyens à mettre en oeuvre pour l'exploitation et traitement de tels signaux sont classiques. Les moyens d'authentification et moyens de destruction des informations peuvent être identiques aux moyens décrits aux figures 1 et 2.

L'alimentation du premier circuit intégré peut être effectué également par couplage capacitif.

Deux types différents de connexions peuvent être utilisés pour l'alimentation et pour la transmission de données, par exemple électromagnétique pour l'une, capacitive pour l'autre.

Le fonctionnement du dispositif de sécurité de la figure 1, s'effectue comme indiqué ci-après.

Le dispositif étant sous tension, par exemple, par une pile de sauvegarde extérieure, une communication périodique est établie entre les deux composants par exemple pour réaliser une procédure d'authentification mutuelle définie notamment par la norme ISO/IEC 9594-8. Si l'un des deux composants rompt la communication et/ou ne s'authentifie pas correctement, les informations secrètes sont effacées dans le composant qui n'authentifie pas l'autre composant. Eventuellement, pour éviter toute simulation des composants en présence, la clé secrète d'authentification est une clé de session dynamique créée à l'initialisation du module de sécurité actif.

Pour atteindre les secrets contenus dans le premier circuit intégré, il est nécessaire d'enlever au préalable le circuit intégré situé au-dessus sans que celui-ci soit détruit ou modifié. Compte tenu du mode de solidarisation des deux circuits intégrés, par exemple, au moyen d'une colle cyanoacrylate, il est pratiquement impossible ou extrêmement périlleux de tenter une séparation du second circuit sans le détruire.

Dans l'hypothèse où il existerait un moyen pour désolidariser le second circuit intégré du premier circuit sans sa destruction ou sa désactivation, on pourrait alors recourir au mode de réalisation du dispositif de sécurité selon son deuxième mode de réalisation (fig. 2 ou fig. 3).

Le fonctionnement du dispositif des figures 1 et 2 s'effectue comme indiqué ci-après.

Si les connexions électriques sont assurées en interne par simple contact, collage ou soudure par le recours à des billes d'indium, il devient alors impossible de découpler les deux circuits intégrés sans rompre le contact.

Si les connexions sont réalisées de manière électro-magnétique, capacitive, optique, le simple mouvement relatif d'un composant par rapport à l'autre provoque une perturbation de l'interaction qui est traitée comme une rupture de connexion.

Si les connexions servent à assurer l'alimentation des circuits intégrés, la rupture de ces dernières provoque l'effacement des informations qui seraient contenues dans une mémoire volatile RAM.

Toute tentative de découplage est rendue d'autant plus difficile que les connexions sont proches du milieu du dispositif de sécurité, c'est-à-dire, proches du milieu des surfaces de contact respectives des composants maître et esclave.

Le fonctionnement des moyens d'authentification du dispositif de sécurité selon le second mode de réalisation est identique à celui du premier mode.

Si des connexions électriques servent à assurer la communication selon une procédure d'authentification, la rupture provoque une absence d'authentification dans la période imposée et les moyens de destruction des informations sont activés, par exemple pour mettre la mémoire au même niveau.

Dans le cas préféré où l'on utilise une mémoire RAM, pour contenir les informations secrètes, les moyens de destruction sont des moyens de coupure de l'alimentation du composant ;

Dans tous les cas de figure, selon ce second mode de réalisation, le déplacement relatif des circuits l'un par rapport à l'autre est sanctionné par la perte des informations secrètes.

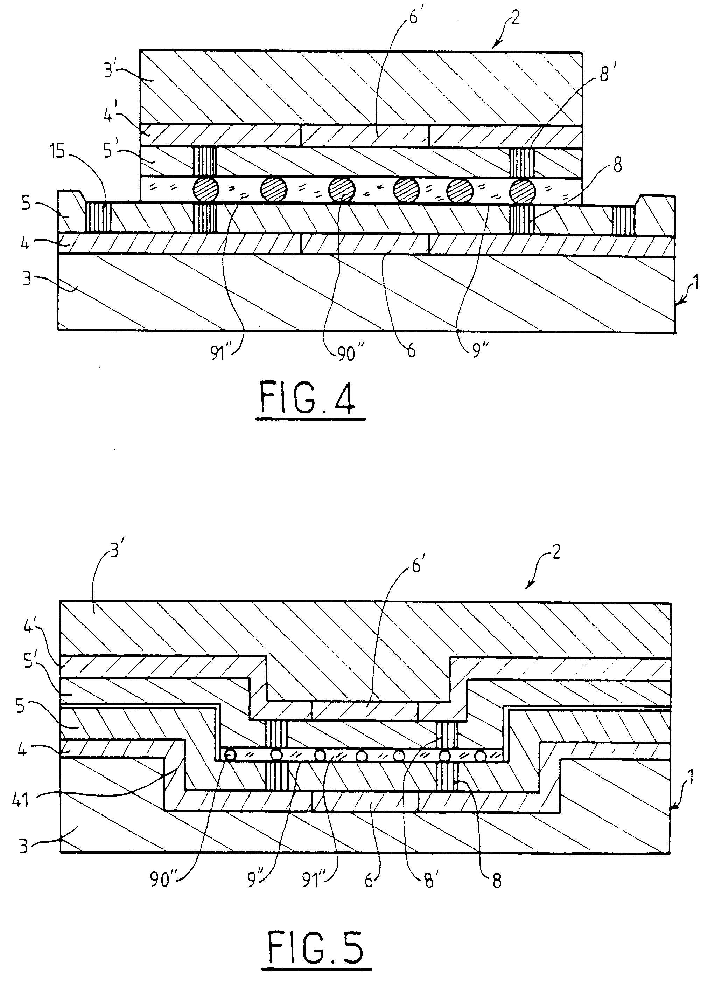

A la figure 4, on voit que les deux circuits intégrés sont montés face à face comme sur les figures 2 et 3. Les mêmes numéros de référence sont utilisés pour les mêmes éléments.

Toutefois, dans ce mode de réalisation les moyens de liaison entre les deux circuits sont de nature différente. On peut observer en effet que la connexion électrique est constituée par un film conducteur anisotrope 9" formé de microbilles 90", billes de polymère de 10 à 20 µm enrobées d'or par exemple, isolées les unes des autres dans une feuille d'adhésif 91" électriquement isolante en résine époxyde ou en résine thermoplastique. Lorsqu'on applique une pression sur l'assemblage, les billes qui se trouvent dans la zone comprise entre les points 8, 8' de connexion viennent en contact avec ceux-ci et forment un chemin conducteur entre les deux circuits. Par contre, dans une direction perpendiculaire, aucun contact ne se produit entre les microbilles 90", et la feuille d'adhésif 91" reste parfaitement isolante et ne peut conduire aucun courant. Un film conducteur anisotrope de ce type est distribué par la société CDS sous la marque Alpha Bond.

A la figure 5, on a représenté une variante de réalisation de la structure du dispositif de sécurité conforme à l'invention.

Selon cette variante avantageuse, la zone mémoire 4 contenant les informations secrètes présente un épaulement latéral 41. On comprend que de cette manière toute tentative d'accès à la zone mémoire par exploration latérale du dispositif est impossible puisque, du fait de la présence de l'épaulement 41, il en résulterait une perturbation importante du fonctionnement du premier circuit intégré qui empêcherait toute authentification mutuelle avec le second circuit intégré et donc conduirait à la destruction des informations secrètes.

De façon pratique, la couche 5 de passivation du premier circuit intégré déposé sur la zone mémoire 4 présente également un épaulement, de sorte que globalement le premier circuit montre en coupe un profil creux. Le second circuit intégré est alors réalisé de façon à ce que la couche 5' de passivation montre en coupe un profil en saillie, conjugué du profil en creux du premier circuit.

Il est donc possible de monter les deux circuits face à face par simple emboîtement de l'un dans l'autre.

Avantageusement, l'intervalle entre les deux couches 5,5' de passivation est rempli de téflon.

## Revendications

1. Dispositif de sécurité contenant des informations secrètes et destiné à empêcher l'accès à ces informations par des moyens d'exploration externes, du type comprenant un circuit intégré (1) ayant une zone mémoire (6) recevant lesdites informations et des moyens de protection (2) recouvrant solidairement au moins ladite zone mémoire de manière à former obstacle à une exploration, caractérisé en ce que lesdits moyens de protections sont constitués par au moins un second circuit intégré (2), et en ce qu'il comprend en outre des moyens de liaison interactifs (9, 9') entre les deux circuits intégrés, et des moyens de destruction des informations secrètes en cas de rupture ou perturbation de leur liaison.

2. Dispositif selon la revendication 1, caractérisé en ce qu'il comprend des moyens d'authentification permettant d'authentifier au moins le second circuit intégré.

3. Dispositif de sécurité selon la revendication 2, caractérisé en ce que les moyens d'authentification fonctionnent selon une procédure mettant en oeuvre une clé secrète de session dynamique.

4. Dispositif de sécurité selon l'une des revendications 1 à 3, caractérisé en ce que les circuits intégrés sont montés l'un derrière l'autre et comportent des connexions électriques (9) externes les reliant l'un à l'autre.

5. Dispositif de sécurité selon l'une des revendications 1 à 3, caractérisé en ce que les circuits intégrés sont montés face à face et comportent des connexions électriques (9') internes les reliant l'un à l'autre.

6. Dispositif de sécurité selon la revendication 5, caractérisé en ce que les circuits intégrés ont leurs points de connexion électrique (8, 8') disposés face à face.

7. Dispositif de sécurité selon la revendication 6, caractérisé en ce que la connexion des circuits intégrés est réalisée par soudure.

8. Dispositif de sécurité selon la revendication 6, caractérisé en ce que la connexion est réalisée par l'intermédiaire d'une colle conductrice.

9. Dispositif de sécurité selon la revendication 6, caractérisé en ce que la connexion des circuits intégrés est réalisée par un film conducteur anisotrope.

10. Dispositif de sécurité selon l'une des revendications 1 à 3, caractérisé en ce que les circuits intégrés sont montés face à face et comportent des connexions électromagnétiques ou capacitives internes.

11. Dispositif de sécurité selon la revendication 10, caractérisé en ce que les mêmes connexions assurent l'alimentation du premier circuit intégré et la transmission de données.

12. Dispositif de sécurité selon les revendications 5 à 11, caractérisé en ce que les points de connexion des circuits intégrés sont situés dans une zone centrale de leur face de contact respective.

13. Dispositif de sécurité selon l'une quelconque des revendications précédentes, caractérisé en ce que les circuits intégrés sont fixés l'un à l'autre par l'intermédiaire d'une couche de colle (7).

14. Dispositif de sécurité selon les revendications 8 et 13, caractérisé en ce que la fixation des circuits intégrés ainsi que la connexion électrique est assurée par une colle conductrice.

15. Dispositif de sécurité selon l'une quelconque des revendications précédentes, caractérisé en ce que le deuxième circuit intégré comporte également une zone mémoire (6') et en ce que les circuits électroniques disposent de moyens d'authentification mutuelle.

16. Dispositif de sécurité selon l'une quelconque des revendications précédentes, caractérisé en ce que l'un des circuits intégrés au moins comporte une mémoire RAM dans laquelle se trouvent des informations secrètes.

17. Dispositif de sécurité selon l'une quelconque des revendications précédentes, caractérisé en ce que les circuits intégrés se recouvrent mutuellement leurs éléments de circuit (6, 6') susceptibles de donner une information sur les secrets.

18. Dispositif de sécurité selon la revendication 5, caractérisé en ce que l'alimentation du premier ou second circuit intégré s'effectue à travers des connexions électriques internes (9').

19. Dispositif de sécurité selon l'une quelconque des revendications 5 à 9, caractérisé en ce qu'au moins la zone mémoire du premier circuit intégré présente un épaulement latéral.

20. Dispositif de sécurité selon la revendication 19, caractérisé en ce que les circuits intégrés présentent des profils conjugués et en ce qu'ils sont montés face à face par emboîtement l'un dans l'autre.

## Patentansprüche

1. Sicherheitsvorrichtung, die verdeckte Informationen enthält und dazu bestimmt ist, den Zugriff auf diese Informationen über externe Abfragemittel zu verhindern, und die einen integrierten Schaltkreis (1) mit einem Speicherbereich (6), der diese Informationen empfängt, sowie Schutzmittel (2), die wenigstens diesen Speicherbereich unter Bildung eines Hindernisses gegenüber einer Abfrage vollständig abdecken, umfaßt, **dadurch gegekennzeichnet**, daß die Schutzmittel durch mindestens einen zweiten integrierten Schaltkreis (2) gebildet sind und daß außerdem interaktive Verbindungsmittel (9, 9') zwischen den beiden integrierten Schaltkreisen sowie Mittel zum Zerstören der verdeckten Informationen im Falle eines Bruchs oder einer Störung ihrer Verbindung vorgesehen sind.

2. Sicherheitsvorrichtung nach Anspruch 1, dadurch gekennzeichnet, daß Authentisierungsmittel vorgesehen sind, die eine Authentisierung zumindest des zweiten integrierten Schaltkreises ermöglichen.

3. Sicherheitsvorrichtung nach Anspruch 2, dadurch gekennzeichnet, daß die Authentisierungsmittel so arbeiten, daß sie einen Geheimschlüssel zur dynamischen Verbindung in Gang setzen.

4. Sicherheitsvorrichtung nach einem der Ansprüche 1 bis 3, dadurch gekennzeichnet, daß die integrierten Schaltkreise hintereinander angebracht sind und externe elektrische Verbindungen (9) aufweisen, die sie miteinander verbinden.

5. Sicherheitsvorrichtung nach einem der Ansprüche 1 bis 3, dadurch gekennzeichnet, daß die integrierten Schaltkreise einander gegenüberliegend angebracht sind und interne elektrische Verbindungen (9') aufweisen, die sie miteinander verbinden.

6. Sicherheitsvorrichtung nach Anspruch 5, dadurch gekennzeichnet, daß die integrierten Schaltkreise elektrische Verbindungspunkte (8, 8') haben, die einander gegenüberliegend angeordnet sind.

7. Sicherheitsvorrichtung nach Anspruch 6, dadurch gekennzeichnet, daß die Verbindung der integrierten Schaltkreise durch Löten realisiert ist.

8. Sicherheitsvorrichtung nach Anspruch 6, dadurch gekennzeichnet, daß die Verbindung durch Einfügen eines leitfähigen Klebers realisiert ist.

9. Sicherheitsvorrichtung nach Anspruch 6, dadurch gekennzeichnet, daß die Verbindung der integrierten Schaltkreise durch eine anisotrope leitende Schicht realisiert ist.

10. Sicherheitsvorrichtung nach einem der Ansprüche 1 bis 3, dadurch gekennzeichnet, daß die integrierten Schaltkreise einander gegenüberliegend angebracht sind und innere elektromagnetische oder kapazitive Verbindungen aufweisen.

11. Sicherheitsvorrichtung nach Anspruch 10, dadurch gekennzeichnet, daß dieselben Verbindungen die Versorgung des ersten integrierten Schaltkreises und die Übertragung von Daten sicherstellen.

12. Sicherheitsvorrichtung nach einem der Ansprüche 5 bis 11, dadurch gekennzeichnet, daß sich die Verbindungspunkte der integrierten Schaltkreise in einem zentralen Bereich ihrer jeweiligen Kontaktfläche befinden.

13. Sicherheitsvorrichtung nach einem der vorhergehenden Ansprüche, dadurch gekennzeichnet, daß die integrierten Schaltkreise durch Einfügen einer Klebstoffschicht (7) aneinander befestigt sind.

14. Sicherheitsvorrichtung nach den Ansprüchen 8 und 13, dadurch gekennzeichnet, daß die Befestigung der integrierten Schaltkreise sowie die elektrische Verbindung durch einen leitfähigen Kleber sichergestellt wird.

15. Sicherheitsvorrichtung nach einem der vorhergehenden Ansprüche, dadurch gekennzeichnet, daß der zweite integrierte Schaltkreis ebenfalls einen Speicherbereich (6') umfaßt und daß die elektronischen Schaltkreise wechselseitig Authentisierungsmittel aufweisen.

16. Sicherheitsvorrichtung nach einem der vorhergehenden Ansprüche, dadurch gekennzeichnet, daß zumindest einer der integrierten Schaltkreise einen RAM-Speicher umfaßt, in dem sich die verdeckten Informationen befinden.

17. Sicherheitsvorrichtung nach einem der vorhergehenden Ansprüche, dadurch gekennzeichnet, daß die integrierten Schaltkreise sich gegenseitig überdecken, wobei ihre Schaltkreiselemente (6, 6') geeignet sind, eine Information über die überdeckungen zu übergeben.

18. Sicherheitsvorrichtung nach Anspruch 5, dadurch gekennzeichnet, daß die Versorgung des ersten oder zweiten integrierten Schaltkreises über die internen elektrischen Verbindungen (9') stattfindet.

19. Sicherheitsvorrichtung nach einem der Ansprüche 5 bis 9, dadurch gekennzeichnet, daß zumindest der Speicherbereich des ersten integrierten Schaltkreises einen seitlichen Absatz aufweist.

20. Sicherheitsvorrichtung nach Anspruch 19, dadurch gekennzeichnet, daß die integrierten Schaltkreise verbundene Profile aufweisen und einander gegenüberliegend einer in den anderen eingepaßt sind.

## Claims

1. Security device containing secret information and designed to prevent access to said information by external exploration means, of the type including an integrated circuit (1) having a memory area (6) receiving said information and protection means (2) covering and fastened at least to said memory area to form an obstacle to exploration, characterized in that said protection means comprise at least a second integrated circuit (2) and in that they further comprise interactive connection means (9, 9') between the two integrated circuits and means for destroying the secret information if their connection is interrupted or disrupted.

2. Device according to claim 1, characterized in that it includes authentication means for authenticating at least the second integrated circuit.

3. Security device according to claim 2, characterized in that the authentication means employ a procedure using a dynamic session secret key.

4. Security device according to any one of claims 1 to 3, characterized in that the integrated circuits are disposed one behind the other and include external electrical connections (9) connecting them to each other.

5. Security device according to any one of claims 1 to 3, characterized in that the integrated circuits are disposed face-to-face and include internal electrical connections (9') connecting them to each other.

6. Security device according to claim 5, characterized in that the integrated circuits have their electrical connections (8, 8') disposed face-to-face.

7. Security device according to claim 6, characterized in that the integrated circuits are connected by soldering.

8. Security device according to claim 6, characterized in that the connection is effected by means of a conductive glue.

9. Security device according to claim 4, characterized in that the connection of the integrated circuits is effected by an anisotropic conductive film.

10. Security device according to any one of claims 1 to 3, characterized in that the integrated circuits are disposed face-to-face and include electromagnetic or capacitive internal connections.

11. Security device according to claim 10, characterized in that the same connections supply power to the first integrated circuit and transmit data.

12. Security device according to claims 5 to 11, characterized in that the connections of the integrated circuits are in a central area of their respective contact face.

13. Security device according to any preceding claim, characterized in that the integrated circuits are fixed together by a layer (7) of glue.

14. Security device according to claims 8 and 13, characterized in that the fixing of the integrated circuits and the electrical connection are effected by means of a conductive glue.

15. Security device according to any preceding claim, characterized in that the second integrated circuit also includes a memory area (6') and in that the electronic circuits are provided with mutual authentication means.

16. Security device according to any preceding claim, characterized in that at least one of the integrated circuits includes a RAM containing secret information.

17. Security device according to any preceding claim, characterized in that each integrated circuit covers circuit elements (6, 6') of the other integrated circuit from which information on the secrets can be derived.

18. Security device according to claim 5, characterized in that the power supply to the first or second integrated circuit is effected through internal electrical connections (9').

19. Security device according to any one of claims 5 to 9, characterized in that at least the memory area of the first integrated circuit has a lateral shoulder.

20. Security device according to claim 19, characterized in that the integrated circuits have complementary profiles and in that they are disposed face-to-face by fitting one inside the other.
